(19) Europäisches Patentamt
European Patent Office
Office européen des brevets

(11) **EP 4 300 317 A1**

(12) **EUROPEAN PATENT APPLICATION**
published in accordance with Art. 153(4) EPC

(43) Date of publication:
**03.01.2024 Bulletin 2024/01**

(21) Application number: **22760101.0**

(22) Date of filing: **25.02.2022**

(51) International Patent Classification (IPC):
**G06F 11/36** (2006.01)     **G06N 20/20** (2019.01)

(52) Cooperative Patent Classification (CPC):
**G06F 11/36; G06N 20/20**

(86) International application number:
**PCT/KR2022/002759**

(87) International publication number:
**WO 2022/182185 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 KR 20210026393**

(71) Applicant: **Korea University Research and Business Foundation**
**Seoul 02841 (KR)**

(72) Inventors:
• **JUN, Donghun**
  **Seoul 05507 (KR)**
• **OH, Hakjoo**
  **Seoul 06001 (KR)**
• **JEON, Min-Seok**
  **Seoul 05507 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **PROGRAM ANALYSIS DEVICE AND METHOD**

(57) The present invention relates to a program analysis device and method, wherein the program analysis device may comprise: a selection unit for selecting one of top-down processing or bottom-up processing for at least one analysis equation among a plurality of analysis equations; a first learning unit which, when the selection unit selects the top-down processing, performs top-down processing for the at least one analysis equation on the basis of a first learning algorithm in response to the selection, and thereby acquires at least one first learned analysis equation; and a second learning unit which, when the selection unit selects the bottom-up processing, performs bottom-up processing for the at least one analysis equation on the basis of a second learning algorithm in response to the selection, and thereby acquires at least one second learned analysis equation.

FIG. 3

**Description**

TECHNICAL FIELD

Example embodiments relate to a program analysis device and method.

RELATED ART

A program analysis method may be largely classified into a static analysis method and a dynamic analysis method. The static analysis method refers to a method of verifying and analyzing errors in a rule or security vulnerabilities by analyzing a source code of a program without executing the program. The dynamic analysis method refers to a method of analyzing a program while executing the program.

Pointer analysis is one of program static analysis methods and used to identify all object(s) that may be indicated with a pointer variable or an expression in a program execution process before executing a program. A result of the pointer analysis may be used for bug detecting, program verification, or automatic program repair. For fast and accurate pointer analysis, an appropriate high-performance analysis strategy needs to be prepared. For example, in the case of performing analysis without considering context, a plurality of false alarms not occurring during actual execution of a program may be detected din an analysis process. The false alarms overload a developer's work, which causes resources and time for program development to be wasted. On the contrary, in the case of performing analysis in consideration of context, the number of false alarms detected significantly decreases and accuracy and practicality of the analysis are improved. However, an amount of time required for analysis of the program significantly increases.

DETAILED DESCRIPTION

TECHNICAL SUBJECT

Example embodiments provide a program analysis device and method that may more accurately and quickly perform an automatic static analysis on a program at low cost.

SOLUTION

Provided are a program analysis device and a program analysis method to solve the aforementioned subjects.

The program analysis device may include a selection unit configured to select one of top-down processing and bottom-up processing for at least one analysis equation among a plurality of analysis equations; a first learning unit configured to, in response to the selection unit selecting the top-down processing, perform the top-down processing for the at least one analysis equation on the basis of a first learning algorithm and acquire at least one first learned analysis equation; and a second learning unit configured to, in response to the selection unit selecting the bottom-up processing, perform the top-down processing for the at least one analysis equation on the basis of a second learning algorithm and acquire at least one second learned analysis equation.

The program analysis method may include selecting one of top-down processing and bottom-up processing for at least one analysis equation among a plurality of analysis equations; and in response to the selection unit selecting the bottom-up processing, performing top-down processing for the at least one analysis equation on the basis of a second learning algorithm and acquiring at least one second learned analysis equation.

EFFECT

According to the aforementioned program analysis device and method, it is possible to automatically generate analysis equations to be used for analysis using given at least one program and to perform fast and accurate analysis when analyzing other programs by applying the analysis equations generated in this process. Therefore, it is possible to achieve the effect of saving cost (resources, labor, etc.) and an amount of time required for analysis.

According to the aforementioned program analysis device and method, it is possible to automatically generate analysis equations of various analysis depths for selecting a part to be analyzed relatively deeply and in detail and a part to be analyzed relatively shallowly and roughly in terms of program analysis.

According to the aforementioned program analysis device and method, it is possible to analyze a program quickly enough to roughly analyze all contexts while being accurate enough to analyze all contexts in detail.

According to the aforementioned program analysis device and method, it is possible to quickly and accurately perform a static analysis through effective strategy.

BRIEF DESCRIPTION OF DRAWINGS

FIG. 1 is a diagram according to an example embodiment of a program analysis device.
FIG. 2 illustrates an example of a process of sequentially learning an analysis equation.
FIG. 3 is a diagram illustrating an example embodiment of an analysis equation learning unit.
FIG. 4 illustrates an example of a program code corresponding to an operation of an analysis equation learning unit.
FIG. 5 illustrates an example of a program code corresponding to an operation of a first learning unit.
FIG. 6 illustrates an example of a program code corresponding to an operation of a second learning unit.
FIG. 7 illustrates an example of an operation of an analysis unit.
FIG. 8 is a flowchart illustrating an example embodiment of a program analysis method.

MODE

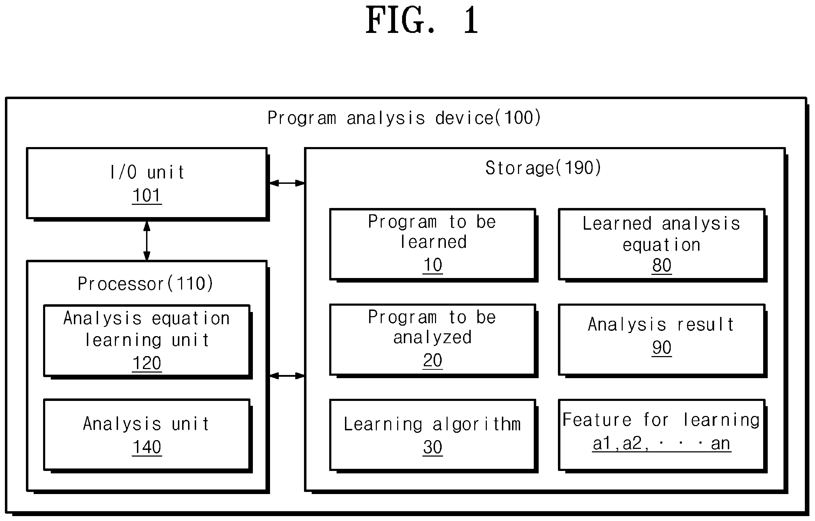

Throughout the following specification, like reference numerals refer to like elements unless otherwise specified. The terms added with "unit" in the following may be implemented in software or hardware. Depending on example embodiments, a single "unit" may be implemented as a single physical or logical component, a plurality of "units" may be implemented as a single physical or logical component, or a single "unit" may be implemented as a plurality of physical or logical components. When it is described that one portion is connected to another portion throughout the specification, it may represent a physical connection or may represent an electrical connection depending on the portion and the other portion. Also, when it is described that one portion includes another portion, it does not exclude still another portion other than the other portion and represents that still another portion may be further included according to a selection of a designer, unless otherwise stated. Terms, such as "first" and "second," are used to distinguish one component from another component and do not represent sequential expression unless otherwise stated. Also, a singular expression may include a plural expression unless there is a clear exception from the context.
Hereinafter, an example embodiment of a program analysis device is described with reference to FIGS. 1 to 7.
FIG. 1 is a diagram illustrating an example embodiment of a program analysis device.
Referring to FIG. 1, a program analysis device 100 may include an input/output (I/O) unit 101, a processor 110, and a storage 190, and at least two of the I/O unit 101, the processor 110, and the storage 190 may be provided to transmit a command/instruction or data in a form of an electrical signal.
The I/O unit 101 may receive a command/instruction, data, or a program (which may be referred to as an app, an application, or software) required for operating the program analysis device 100 from a user, a designer, or other external electronic devices (not shown) and/or may output a learning result, an analysis result, or a program according to an operation of the processor 110 to the user or the designer in a visual form or an auditory manner, or may transmit the same to the other external electronic device in a form of an electrical signal through a wired or wireless communication network. For example, the I/O unit 101 may simultaneously or sequentially receive a program to be learned 10, a program to be analyzed 20, at least one learning algorithm 30, features for learning (feature, a1, a2, ..., an), and the like stored in the storage 190 from the user or the other electronic device, may output a learned analysis equation 80 or a learning result 90 to the user, or may transmit the same to the other electronic device. The I/O unit 101 may be provided in an integral form with the program analysis device 100 and may be provided to be physically separable therefrom. The I/O unit 101 may include, for example, an input device such as a keyboard, a mouse, a tablet, a touchscreen, a touchpad, a track ball, a track pad, a scanner device, an image capturing module, a motion detection sensor, a pressure sensor, a proximity sensor, and/or a microphone and may include, for example, an output device such as a display, a printer device, a speaker device, and/or an image output terminal. Also, depending on example embodiment, the I/O unit 101 may include a data I/O terminal capable of receiving data from another external device (e.g., a portable memory device) or a communication module (e.g., a LAN card, a short-distance communication module, and a mobile communication module) connected to the other external device through a wired/wireless communication network. The I/O unit 101 may be omitted if necessary.
The processor 110 may acquire at least one analysis equation 80 for performing analysis on the program to be analyzed 20 and/or may perform analysis (e.g., static analysis) on the program to be analyzed 20 using the acquired at least one analysis equation 80. Depending on example embodiments, the processor 110 may also perform only a process of acquiring the at least one analysis equation 80. In this case, the acquired analysis equation 80 may be transmitted to the other electronic device through the I/O unit 101 and then used to analyze a program by the other electronic device. Also, the processor 110 may also perform only a process of analyzing the program 20 on the basis of the at least one analysis equation 80. Here, the at least one analysis equation 80 may be one acquired by the other electronic device.
According to an example embodiment, the processor 110 may include at least one of an analysis equation learning unit 120 configured to acquire the at least one learned analysis equation 80 on the basis of the at least one learning algorithm 30 and an analysis unit 140 configured to perform analysis on the basis of the at least one learned analysis equation 80 acquired by the learning algorithm 30. Here, the analysis equation learning unit 120 and the analysis unit 140 may be logically separable and may be physically separable depending on example embodiments. When logically separated, each of the analysis equation learning unit 120 and the analysis unit 140 may be implemented as a program code. Here, each program code may be included in addition to or separate from one or two or more program packages. When physically separated, each of the analysis equation learning unit 120 and the analysis unit 140 may be implemented by employing a separate semiconductor chip. A detailed operation and a function of each of the analysis equation learning unit 120 and the analysis unit 140 are further described below. The processor 110 may be implemented on the basis of, for example, a central processing unit (CPU), a micro controller unit (MCU), an application processor (AP), a micro processor (MICOM), an electronic control unit (ECU), and/or other electronic devices capable of processing various arithmetic operations and generating control signals. The devices may be produced by employing, for example, a part related to one or two or more semiconductor chips.

The storage 190 may transitorily or non-transitorily store data or a program required for operating the program analysis device 100. For example, the storage 190 may transitorily or non-transitorily store the at least one program to be learned 10 used for learning and generation of the analysis equation 80 by the analysis equation learning unit 120, the program to be analyzed 20 in which an error presence status is analyzed by the analysis unit 140, the predetermined learning algorithm 30 used for learning of the analysis equation 80, the at least one learned analysis equation 80 of which a learning result is acquired, the analysis result 90 about the program to be analyzed 20, and/or the at least one feature (a1, a2, ..., an) used for learning and generation of the analysis equation 80. Depending on example embodiments, the at least one program to be learned 10 and the program to be analyzed 20 may be the same as each other or may differ from each other. When the at least one program to be learned 10 is the same as the program to be analyzed 20, the program to be analyzed 20 may be omitted. Depending on example embodiments, the storage 190 may not store some data or algorithms of the components (10 to 90) and/or may store other various data or algorithms in addition thereto. Also, the storage 190 may store at least one setting or command/instruction for operation of the processor 110 or may store a program or a program package for operation of the processor 110. The program or the program package for operation of the processor 110 may be directly prepared or modified by the designer and then stored in the storage 190, and may also be stored in the storage 190 through a recording medium such as a memory device or DVD, and/or may also be acquired or updated through an electronic software distribution network accessible through a wired or wireless communication network. The storage 190 may include at least one of, for example, a main memory device and an auxiliary memory device. The main memory device may include read only memory (ROM) and/or random access memory (RAM) and the auxiliary memory device may be implemented by using at least one recording medium capable of permanently or semi-permanently storing data, such as a flash memory device, a secure digital (SD) card, a solid state drive (SSD), a hard disc drive (HDD), a magnetic drum, a compact disc (CD), a DVD, and/or a floppy disk.

The program analysis device 100 may be implemented by a single information processing device or by combining two or more same or different information processing devices. Here, the information processing device may include, for example, a desktop computer, a laptop computer, a smartphone, a tablet PC, a smart watch, a head mounted display (HMD) device, a navigation device, a portable game console, a personal digital assistant (PDA), a digital television (TV), a set-top box, an artificial intelligence (AI) sound playback device (AI speaker), home appliances (a refrigerator, a washing machine), a manned moving object (a vehicle such as a car, a bus, and a two-wheeled vehicle), an unmanned mobile object (a robot cleaner), a manned flying object, an unmanned aerial vehicle (a drone), a home or industrial robot, an industrial machine, an electronic blackboard, an electronic billboard, and an automated teller machine (ATM), but is not limited thereto. In addition to the aforementioned devices, the designer or the user may consider and apply at least one of various devices capable of performing calculation processing and control of information as the program analysis device 100 according to a situation or a condition.

Also, the program analysis device 100 may be provided to receive, from another device, a program that includes the program to be learned 10, the program to be analyzed 20, or the learning algorithm 30 and/or to transmit an analysis result or the program to the other device through communication with the external other device. Here, communication between the program analysis device 100 and the other device may be performed on the basis of a wired communication network, a wireless communication network, or combination thereof. Here, the wireless communication network is based on at least one of short-distance communication network technology and long-distance communication network technology. For example, the short-distance communication network technology may include wireless fidelity (Wi-Fi), Wi-Fi Direct, Bluetooth, ZigBee communication, CAN communication, radio frequency identification (RFID), and/or near field communication (NFC). The long-distance communication technology may include, for example, a mobile communication standard, such as 3GPP, 3GPP2, WiBro, and WiMAX series.

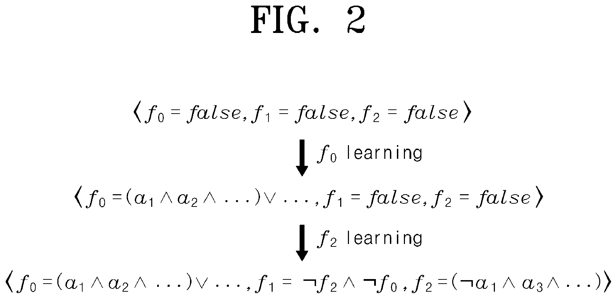

Hereinafter, an operation of the analysis equation learning unit 120 is further described with reference to FIGS. 2 to 6.

FIG. 2 illustrates an example of a process of sequentially learning an analysis equation.

According to an example embodiment, as illustrated in FIG. 2, if one or two or more pre-learning analysis equations $f_i$ ($f_0$, $f_1$, $f_2$, etc.) are given (in this case, each analysis equation $f_0$, $f_1$, $f_2$ may be set to a predefined initial value, such as false), the analysis equation learning unit 120 of the processor 110 may generate each analysis equation $f_i$ ($f_0$, $f_1$, $f_2$, etc.) to include at least one feature ($a_1$, $a_2$, ..., $a_n$) by performing learning on each analysis equation $f_i$ ($f_0$, $f_1$, $f_2$, etc.) at least once.

Here, the analysis equation $f_i$ represents a program component (e.g., function) to which an analysis depth of i needs to be given. For example, the analysis equation $f_i$ may represent a set of functions to be analyzed with the analysis depth of i. Each analysis equation $f_0$, $f_1$, $f_2$ does not have a common function therebetween. For example, a function included in the analysis equation $f_0$ is not included in the other analysis equations $f_1$ and $f_2$ ($f_0 \cap f_1 \cap f_2 = \varphi$).

The analysis equation $f_i$ may include a logical expression produced using a disjunctive model. In detail, when features ($a_1$, $a_2$, ..., $a_n$) are given, the analysis equation $f_i$ ($f_0$, $f_1$, $f_2$, etc.) may be generated by using one feature ($a_1$, $a_2$, ..., $a_n$) alone or by combining two or more features ($a_1$, $a_2$, ..., $a_n$) among the one or more features ($a_1$, $a_2$, ..., $a_n$) as shown in Equation 1 below.

[Equation 1]

$$ f \rightarrow true \,|\, false \,|\, a_i \in features \,|\, \neg f \,|\, f_1 \wedge f_2 \,|\, f_1 \vee f_2 $$

Here, the feature ($a_1$, $a_2$, ..., $a_n$) refers to a function of verifying or asking what feature a component of a program (e.g., which may include JAVA method and the same as below) and may be defined as Equation 2 below.

[Equation 2]

$$ a_i(P) : M_P \rightarrow \{true, false\} $$

In detail, for feature a that "output value (output) is void," $[[a]]_p$ represents a set of methods in which an output value is void in program P. A feature added with an equation or a symbol (i.e., complex feature) may represent property of a function that is difficult to express only with each individual feature. This may be expressed in a form of a declaration. For example, complex feature $[[\neg a]]_p$ may be defined to represent a set of functions that do not have the feature a (e.g., a set of functions of which output value is not void), $[[a_i \wedge a_j]]$ may be defined to represent a set of functions that have all of two features $a_i$ and $a_j$, and/or $[[a_i \vee a_j]]$ may be defined to represent a set of functions that have at least one of the two features $a_i$ and $a_j$. In addition thereto, the designer or the user may further define a new complex feature according to an arbitrary selection and may also define each of the complex features differently from those described above.

According to an example embodiment, the processor 110 may simultaneously perform learning on all or some of the analysis equations $f_0$, $f_1$, and $f_2$. According to another example embodiment, the processor 110 may sequentially perform learning on each of the analysis equations $f_0$, $f_1$, and $f_2$ one by one. In detail, for example, the processor 110 may perform learning on one analysis equation $f_0$, may perform learning on another analysis equation $f_2$, and may perform learning on still another analysis equation $f_1$. Sequentially performing learning on each of the analysis equations $f_0$, $f_1$, and $f_2$ may have the effect of reducing a search space in which learning is to be performed. For example, in a case in which analysis equations $f_0$ to $f_k$ (k denotes an integer of 0 or more) are to be acquired through learning and here, a space to be searched for calculation and acquisition of one analysis equation $f_a$ is $|S|$, a search space for acquiring (k+1) analysis equations at a time is $|S|^{k+1}$. However, this search space $|S|^{k+1}$ is too broad, which makes it very difficult to detect an optimal analysis equation. However, unlike this, in the case of sequentially acquiring one or more analysis equations $f_0$ to $f_k$ by repeating a process of acquiring only one analysis equation at a time (k+1) times, the search space is given as (k+1)*$|S|$. Therefore, the search space for analysis equation acquisition significantly decreases, which may result in increasing search efficiency and reducing resources, time, and cost.

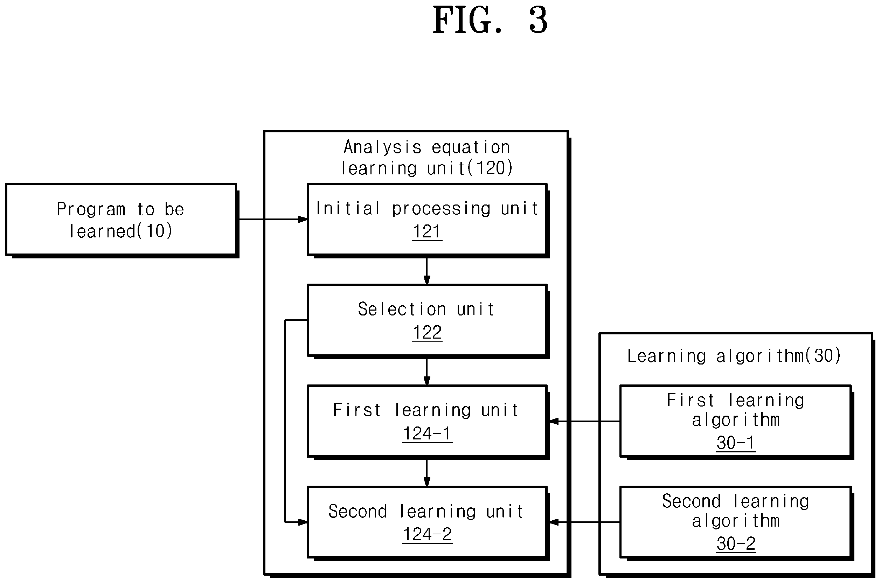

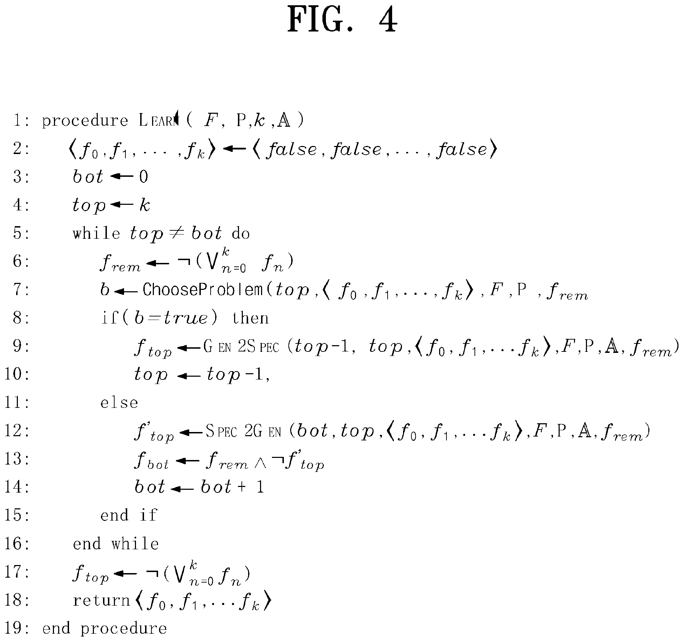

FIG. 3 is a diagram illustrating an example embodiment of an analysis equation learning unit, and FIG. 4 illustrates an example of a program code corresponding to an operation of an analysis equation learning unit. In FIG. 4, procedure $L_{EARN}$ (F, P, K, A) function (method) is an example of a program code of a function that represents an operation of the analysis equation learning unit 120. Here, F denotes a static analyzer to be used for learning, P denotes a program, k denotes a maximum analysis depth, and A denotes a set of features ($a_1$, $a_2$, ..., $a_n$).

Referring to FIG. 3, to acquire the aforementioned analysis equations $f_0$ to $f_k$, the analysis equation learning unit 120 may include an initial processing unit 121, a selection unit 122, a first learning unit 124-1, and a second learning unit 124-2.

Referring to FIG. 4, the initial processing unit 121 may initialize all or some of the analysis equations $f_0$ to $f_k$ to be learned in relation to the program to be learned 10 to a predefined value (e.g., false) (line 2). Also, the initial processing unit 121 may allocate a predefined initial value at least one variable (top, bot) to be used within the function (lines 3 and 4). For example, the variables top and bot may be initialized to k and 0, respectively. Here, the variable top refers to a variable for identifying each top-down processing (top-down) performed by the first learning unit 124-1 and may be provided to decrease by 1 each time top-down processing is performed (see line 10). Also, the variable bot refers to a variable for identifying each bottom-up processing (bottom-up) performed by the second learning unit 124-2 and may be designed to increase by 1 each time bottom-up processing is performed (see line 14).

The selection unit 122 may simultaneously or sequentially select at least one analysis equation ($f_{bot}$ or $f_{top}$) that has not been acquired since learning processing is not performed among the analysis equations $f_0$ to $f_k$ to be learned (line 6). Unprocessed at least one analysis equation ($f_{bot}$ or $f_{top}$) may be initialized to a value of false as described above. Subsequently, the selection unit 122 may determine whether to perform bottom-up processing or perform top-down processing thereon (line 7). That is, the selection unit 122 may determine whether to process the analysis equation ($f_{bot}$ or $f_{top}$) to be learned using the first learning unit 124-1 or to process the same using the second learning unit 124-2.

According to an example embodiment, when executing an analysis method having a most sophisticated abstraction currently available for given logical expression parameter ($\Pi$), the selection unit 122 may estimate whether the given top-down processing ($\psi_{top}$) is a possible problem solving method. Here, the logical expression parameter ($\Pi$) of the function may be given by Equation 3 below.

[Equation 3]

$$\Pi = <f_0, f_1, \cdots, f_{top-1}, f_{rem}, f_{top+1}, \cdots, f_k>$$

The top-down processing ($\psi_j$) refers to processing performed to acquire logical expression $f_j$ with a deepest analysis depth among unlearned logical expressions $<f_i, f_{i+1}, ..., f_j>$ and the top-down processing ($\psi_j$) for the analysis equation $f_j$ may be given as Equation 4 below.

[Equation 4]

$$\Psi_j \equiv Find\ f_j\ minimizing\ \sum_{p \in P} cost(F_p(H_{\Pi_j}(p)))\ subject\ to\ Precise(\Pi_j, F, P)$$

Here, function $Precise(\Pi_j, F, P)$ is a function that determines whether an acquired parameter $\Pi_j$ is sufficiently sophisticated for learning data. In this case, functions each of which analysis depth is not determined are processed to have a depth of j-1 and learned. For example, $Precise(\Pi_j, F, P)$ may be defined as Equation 5 below.

[Equation 5]

$$Precise(\Pi_j, F, P) = \frac{\sum_{p \in P} |proved(F_p(H_{\Pi_j}(p)))|}{\sum_{p \in P} |proved(F_p(k))|} \geq \gamma$$

That is, $Precise(\Pi_j, F, P)$ is a function that is satisfied when a ratio of queries proved in relation to $\Pi_j$ and queries proven in relation to a parameter (k) having a greatest possible accuracy by applying the depth k to all of program components (e.g., function) is greater than a predetermined threshold ($\gamma$: $\gamma \in [0,1]$). Meanwhile, a heuristic function $H_{\Pi_j}$ refers to a function that determines an analysis depth for each program component (e.g., function) present in an arbitrary program P and may be defined, for example, as Equation 6 below.

[Equation 6]

$$H_{\Pi}(P) \equiv \lambda m \in M_P \begin{cases} k & \text{if } m \in [[f_k]]_P \\ k\text{-}1 & \text{if } m \in [[f_{k-1}]]_P \\ \cdots \\ k\text{-}i & \text{if } m \in [[f_{k-i}]]_P \\ \cdots \\ 1 & \text{if } m \in [[f_1]]_P \\ 0 & \text{if } m \in [[f_0]]_P \end{cases}$$

That is, the top-down processing ($\psi_j$) relates to finding $f_j$ that maximizes performance of the heuristic function $H_{\Pi_j}$ for relatively large j (i.e., for the analysis equation $f_j$ having a relatively large analysis depth). To maximize the performance of the heuristic function $H_{\Pi_j}$, an analysis equation that minimizes a set of functions represented by $f_j$ within the limit of maintaining accuracy needs to be found.

To this end, if processing of the analysis equation is terminated within a given cost threshold (C) range, the selection unit 122 returns a predetermined value (e.g., true). On the contrary, if analysis and processing may not be completed within the given cost threshold (C) range, the selection unit 122 returns a value (e.g., false) different from the predetermined value. This operation may be performed using at least one function (e.g., ChooseProblem (top, $\Pi$, F, P, $f_{rem}$)). Here, ChooseProblem (top, $\Pi$, F, P, $f_{rem}$) function may be expressed as Equation 7 below.

[Equation 7]

$$ChooseProblem\,(top, \Pi, F, P, f_{rem}) = \begin{cases} true & \sum cost(F_P(H_{\Pi_j}(P))) < C \\ false & otherwise \end{cases}$$

If the predetermined value, that is, true is output, the top-down processing ($\psi_j$) is determined to be processible (line 8) and the top-down processing ($\psi_{top}$) is performed for the given function $f_{top}$ (line 9). According to an example embodiment, the top-down processing ($\psi_{top}$) may be performed by the first processing unit 124-1 and the first processing unit 124-1 may perform the top-down processing ($\psi_{top}$) using a first learning algorithm 30-1. Therefore, a learned analysis equation corresponding to the top-down processing ($\psi_{top}$) (hereinafter, a first learned analysis equation) may be acquired. Here, in the above problem, a function ($m \notin f_0 \vee f_1 \vee \cdots \vee f_k$) in which a depth is not determined may be set and processed to have the depth of j-1 in an example embodiment. Meanwhile, when the top-down processing ($\psi_{top}$) is performed, a value acquired by subtracting 1 from a value of the existing variable top is input to the variable top. Therefore, learning on an analysis equation with a relatively low analysis depth (j-1) may be performed. That is, if learning on the analysis equation $f_j$ may be performed and the top-down processing ($\psi_{j-1}$) is equally selected in a subsequent selection process, learning on the analysis equation $f_{j-1}$ may be performed in response thereto. Accordingly, at least one analysis equation ($f_m$, , m= j, j-1, j-2, ... ) is processed ($\psi_m$) in a top-down manner (i.e., in a direction in which an analysis depth becomes shallow) and at least one first learned analysis equation corresponding thereto is acquired.

On the contrary, if a value different from the predetermined value, that is, false is output, the top-down processing ($\psi_{top}$) is determined to be impossible and another processing (i.e., bottom-up processing ($\psi_{bot}$)) is selected and performed (lines 11 to 14). In response to the bottom-up processing ($\psi_{bot}$) being performed, analysis equation $f_{top}$ may be returned (line 12). An intersection ($f_{rem} \wedge \neg f'_{top}$) between negation ($\neg f'_{top}$) of $f_{top}$ and $f_{rem}$ ($f_{rem}$ is a logical expression in which it is coprime with $f_k$ within $f_0$ (line 6)) is input to the variable $f_{bot}$ (line 13). Therefore, the negation of $f'_{top}$ is separated from other decomposition equations used as $f_{bot}$. In response to the bottom-up processing ($\psi_{bot}$) being performed, a value acquired by adding 1 to a value of the existing variable bot is input to the variable bot (line 14). Therefore, learning on an analysis equation with a relatively deeper analysis depth may be performed. That is, if an analysis equation (hereinafter, a second learned analysis equation) learned by performing learning on the analysis equation $f_j$ with a relatively shallow analysis depth (i) is acquired and the bottom-up processing ($\psi_{j-1}$) is selected in a subsequent selection process, learning on the analysis equation $f_{i+1}$ may be performed and another second learned analysis equation may be acquired in response thereto. As a result, at least one analysis equation ($f_n$, m= i, i+ 1, i+2, ... ) may be processed ($\psi_m$) in a bottom-up manner (i.e., in a direction in which an analysis depth increases) and one or two or more second learned analysis equations corresponding thereto may be performed. The bottom-up processing ($\psi_{bot}$) may be performed on the basis of a second learning algorithm 30-2 to be processed by the second processing unit 124-2 and the second learning algorithm 30-2 may include, for example, SPEC2GEN function to be described below.

According to an example embodiment, the aforementioned bottom-up processing ($\psi_i$) may be designed to be acquired by calculating Equation 8 below.

[Equation 8]

$$\psi_i \equiv Find\ f_i\ minimizing\ \sum_{p \in P} cost(F_p(H_{\Pi_i}(p)))\ subject\ to\ Precise(\Pi_i, F, P)$$

Contrary to the top-down processing ($\psi_j$), in the bottom-up processing ($\psi_i$), an analysis equation that maximizes a set of functions represented by $f_i$ for relatively small i (i.e., for the analysis equation $f_i$ with the relatively shallow analysis depth) within the limit of maintaining accuracy maximizes performance of the heuristic function $H_{\Pi_j}$. In this case, functions each of which analysis depth is not determined are processed to have a depth of j and analyzed.

The aforementioned process may be repeated until the variables bot and top are equal to each other (i.e., top=bot) (see lines 5 and 16). In the process of iteration, the selection unit 122 may repeatedly select the top-down processing ($\psi_{top}$), may repeatedly select the bottom-up processing ($\psi_{bot}$), and also may alternately select the top-down processing ($\psi_{top}$) and the bottom-up processing ($\psi_{bot}$) depending on a situation. Therefore, although the top-down processing ($\psi_{top}$) is selected in a previous process, the top-down processing ($\psi_j$) or the bottom-up processing ($\psi_{bot}$) is not necessarily selected in a subsequent process.

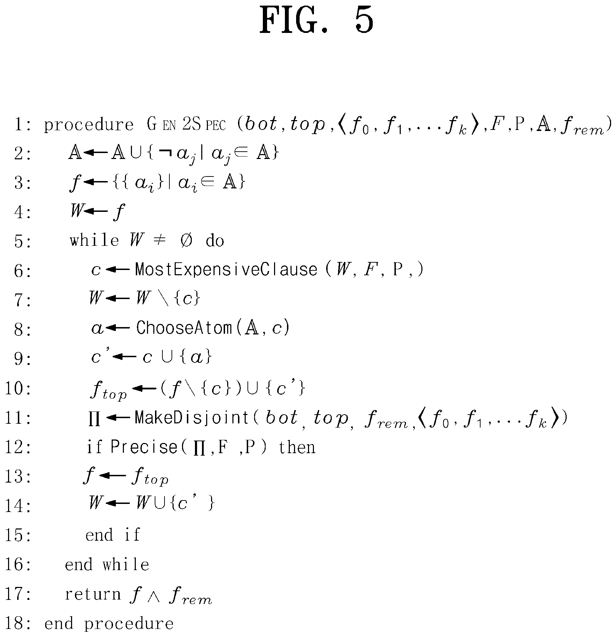

FIG. 5 illustrates an example of a program code corresponding to an operation of a first learning unit.

As described above, the first learning unit 124-1 may perform top-down processing ($\psi_{top}$). In this case, the top-down processing ($\psi_{top}$) may be implemented on the basis of an algorithm that gradually performs learning from a general analysis equation to a specific logical expression.

Referring to an example embodiment of FIG. 5, the top-down processing ($\psi_{top}$) may be performed through the predefined first learning algorithm 30-1 and the first learning algorithm 30-1 may include GEN2SPEC (bot, top, <$f_0$, $f_1$, ..., $f_k$>, F, P, A, $f_{rem}$) function. In detail, the GEN2SPEC function sets a target set that includes a set (A) of individual features ($a_j$) and negation ($\neg a_j$) thereof (line 2) and is provided to generate the analysis equation f as a most general initial analysis equation by including the individual features ($a_i$) of the target set or a logical sum of at least one individual feature(s) ($a_j$) (line 3). Then, the analysis equation f is recorded in a work list (W) (line 4). If the work list (W) is not a null set, a clause c to be refined is selected from the work list (W) and removed from the work list (W) (lines 6 and 7). In this case, selection of c may be performed on the basis of Equation 9 that is designed to return the clause c that consumes largest cost, as follows:

[Equation 9]

$$MostExpensiveClause\ (W, F, P) = \genfrac{}{}{0pt}{}{argmin}{c \in W} \sum_{p \in P} cost(F_p(H_{\Pi_c}(p)))$$

Sequentially, the feature a may be acquired (line 8). The feature a represents the most identical or similar feature to the clause c and may be acquired, for example, using Equation 10 below.

[Equation 10]

$$ChooseAtom(A, c) = \begin{cases} argmax\_a \in A\{c\} \sum_{p \in P} |[c \wedge a]_p| & if\ A\{c\} \neq \phi \\ false & otherwise \end{cases}$$

Sequentially, a refined clause c' is acquired by combining the clause c and the feature {a} (line 9) and a new analysis equation $f_{top}$ is acquired by substituting the existing clause c on the basis of the refined clause c' (line 10). Subsequently, a new parameter ($\Pi$) is determined by separating connection between the respective functions $t_0$ to $f_k$ (line 11) and whether the set ($\Pi$) of functions is sophisticated is determined using the aforementioned precise ($\Pi_j, F, P$) function (line 12). If the parameter ($\Pi$) is sophisticated, the analysis equation f is updated by the analysis equation $f_{top}$ (line 13) and the refined clause c' is added to the work list (W) (line 14). Otherwise, updating of the analysis equation f and the work list (W) is not performed. This process is repeated until the work list (W) becomes a null set.

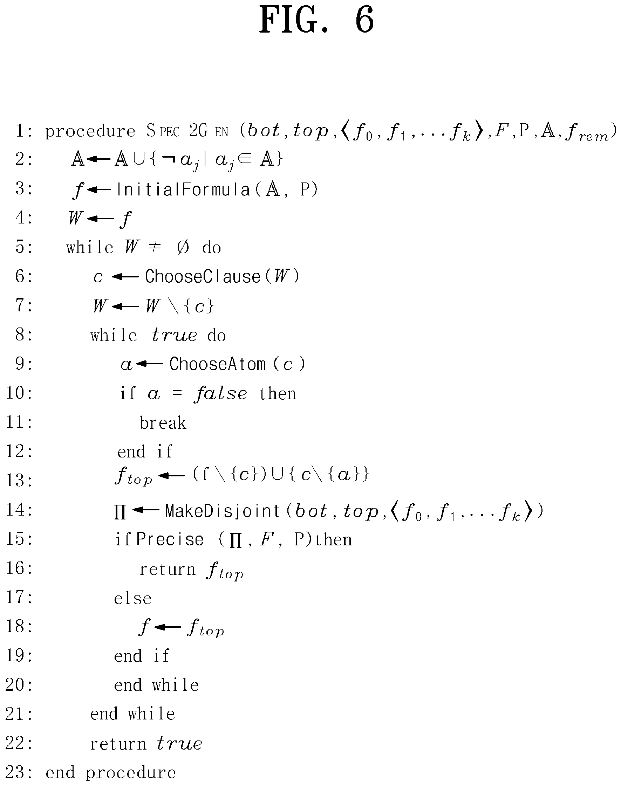

FIG. 6 illustrates an example of a program code corresponding to an operation of a second learning unit.

As described above, the second learning unit 124-2 may perform bottom-up processing ($\psi_{bot}$). Here, the bottom-up processing ($\psi_{bot}$) may include an algorithm that is implemented to gradually generalize from an analysis equation including a set of a relatively small number of functions to an analysis equation including a set of a large number of program components.

According to an example embodiment, the bottom-up processing ($\psi_{bot}$) may be performed on the basis of the second learning algorithm 30-2 and may be performed, for example, using SPEC2GEN (bot, top, $<f_0, f_1, ..., f_k>$, F, P, A, $f_{rem}$) function as illustrated in FIG. 6. In the SPEC2GEN function according to an example embodiment, a target set that includes a set (A) of individual features ($a_j$) and negation ($\neg a_j$) thereof is set (line 2) and the analysis equation f is defined by the initial analytic function (e.g., InitialFormula (A, P)) (line 3).

Here, InitialFormula (A, P) may be given as Equation 11 below.

[Equation 11]

$$\{c \in C \mid C = ClausesThatProveQueries(P,A), \forall c' \in C. \, c' \subseteq c \Rightarrow c' = c\}$$

ClausesThatProveQueries(P,A) of Equation 11 may be defined as Equation 12.

[Equation 12]

$$ClausesThatProveQueries(P, A) =$$

$$\{AtomsThatProveQuery(P, q, A) \mid$$

$$p \in P, q \in Q_p, q \nsubseteq proved\,(F_p(H_{\Pi_{false}}(p)))\}$$

The function AtomsThatProveQuery(P,q,A) of Equation 12 may be defined as in Equation 13.

[Equation 13]

$$AtomsThatProveQuery(P,q,A) = \{a \in A, q \subseteq proved(F_p(H_{\Pi_a}(p)))\}$$

The initial analysis equation f generated according to the above Equation 11 to Equation 13 represents queries by a possible smallest set of clauses.

Sequentially, the initial analysis equation f is input to the work list (W) (line 4) and, if the work list is not a null set (line 5), at least one clause c may be selected (line 6) and the clause c may be removed from the work list (W) (line 7). The at least one clause c may be performed using ChooseClause(W) function as in Equation 14 below.

[Equation 14]

$$ChooseClause(W) = \underset{c \in W}{argmin} \mid \sum_{p \in P} [[c]]_p \mid$$

Once the clause c is acquired, the second learning unit 144-2 repeatedly performs generalization on the clause (lines 8 to 20). In detail, the feature a is acquired using the ChooseAtom function of Equation 10 (line 9). Here, if the acquired feature a is false, repetition is terminated (lines 10 and 11) and, on the contrary, if the feature a is not false, a generalized analysis equation $f_{top}$ and a generalized set ($\Pi$) are acquired, respectively (lines 13 and 14). The analysis equation $f_{top}$ is defined as a union of a difference set acquired by subtracting the clause c from the analysis equation f and a difference set acquired by subtracting a set of features {a} from the clause c and the generalized set ($\Pi$) may be determined by separating connection between the respective functions $f_0$ to $f_k$.

Subsequently, whether the generalized analysis equation $f_{top}$ is sophisticated may be reviewed. To this end, the aforementioned *precise*($\Pi_j$, *F, P*) function may be used. If the generalized analysis equation $f_{top}$ is determined to be sophisticated as a calculation result of the *precise*($\Pi_j$, *F, P*) function, the analysis equation $f_{top}$ is returned (lines 15 and 16). On the contrary, if the analysis equation $f_{top}$ is not determined to be sophisticated (line 17), the analysis equation $f_{top}$ is input to f (line 18) and the aforementioned process is repeated (line 20). That is, the clause c is further generalized. If there is no feature to be subtracted from the clause c (line 10), another clause is generalized (line 6).

The aforementioned process may be repeated until the work list (W) becomes a null set (lines 5 and 21).

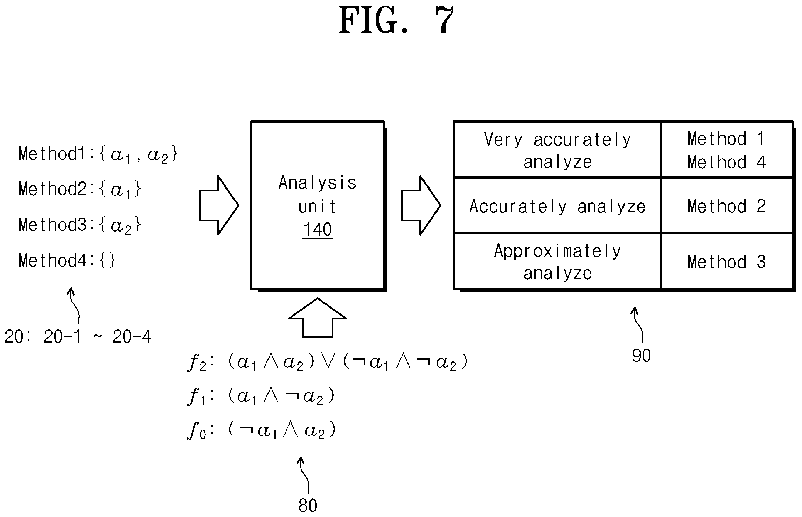

FIG. 7 illustrates an example of an operation of an analysis unit.

As described above, the learned analysis equation 80, for example, analysis equations $f_0$, $f_1$ and $f_2$, may be acquired as illustrated in FIG. 7. Here, the learned analysis equation 80 may include at least one of at least one first learned analysis equation acquired by the first learning unit 144-1 and at least one second learned analysis equation acquired by the second learning unit 144-2. In this case, the analysis unit 140 may determine an analysis depth of each function or a combination of two or more functions of the program to be analyzed 20 (e.g., Method 1 20-1 to Method 4 20-4) to be analyzed on the basis of the learned analysis equation 80 and may output the analysis result 90. In detail, for example, in a situation in which the analysis equation $f_0$ (i.e., a set of functions to be analyzed at shallowest depth) is given as ($\neg a_1 \wedge a_2$), the analysis equation $f_1$ (i.e., a set of functions to be analyzed at medium depth) is given as ($a_1 \wedge \neg a_2$), and the analysis equation $f_2$ (i.e., a set of functions to be analyzed at deepest depth) is given as ($a_1 \wedge a_2$)$\vee$($\neg a_1 \wedge \neg a_2$) according to a learning result, if Method 1 20-1 of the program to be analyzed 20 includes features $a_1$ and $a_2$ ($\{a_1, a_2\}$), Method 2 20-2 includes the feature $a_1$ ($\{a_1\}$), Method 3 20-3 includes the feature $a_2$ ($\{a_2\}$), and Method 4 20-4 does not include any feature, the analysis unit 140 may perform determination and classification such that Method 1 20-1 and Method 4 20-4 are very accurately analyzed, Method 2 20-2 is relatively less accurately analyzed compared to Method 1 20-1 and Method 4 20-4, and Method 3 20-3 is approximately analyzed, using the given analysis equations $f_0$ to $f_2$. Therefore, when a specific function is called, an analysis strategy may be constructed by distinguishing and selecting the context with an appropriate depth suitable for the corresponding function and when employed for a pointer analysis, the pointer analysis may be more quickly and accurately performed.

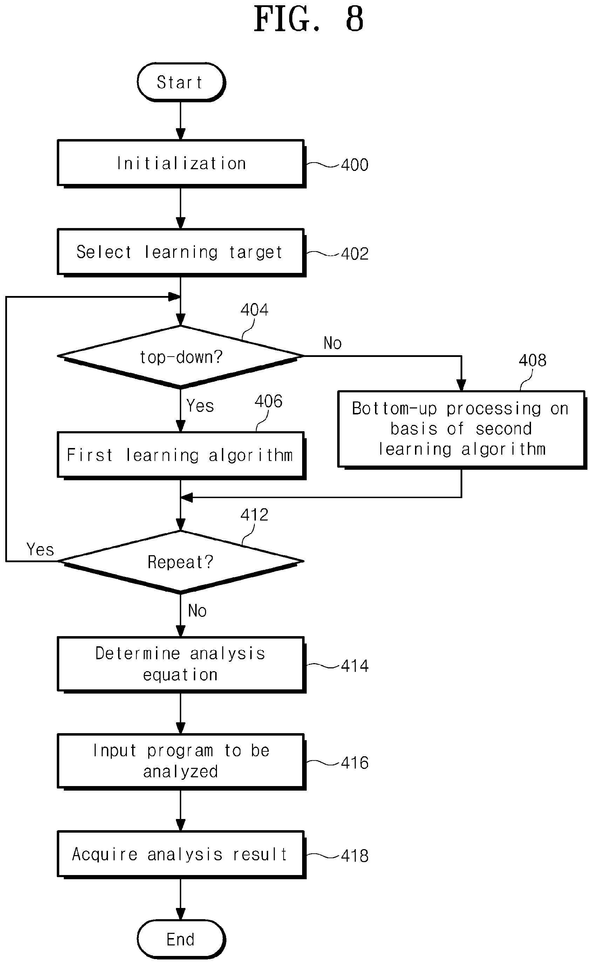

Hereinafter, an example embodiment of a program analysis method is described with reference to FIG. 8.

FIG. 8 is a flowchart illustrating an example embodiment of a program analysis method.

According to the example embodiment of the program analysis method illustrated in FIG. 8, initialization for all or some of analysis equations to be learned in relation to a program to be learned or at least one variable (e.g., the aforementioned top and bot) may be performed (400). The initialization may be performed by processing an analysis equation to a value of false or by allocating a value of 0 or k to the variable.

Simultaneously with the initialization, at least one analysis equation (e.g., $f_{top}$ or $f_{bot}$) for which learning processing is not performed previously or subsequently may be selected. The at least one analysis equation ($f_{top}$ or $f_{bot}$) for which learning processing is not performed may be initialized to, for example, a value of false.

Whether to perform bottom-up processing or to perform top-down processing on the at least one analysis equation for which learning processing is not performed may be determined (404 and 408). Regarding a selection of the top-down processing and the bottom-up processing, for example, whether the top-down processing is possible for a given function set is initially determined. Whether the top-down processing is possible may be determined using the ChooseProblem(top, $\Pi$, F, P, $f_{rem}$) function of the above Equation 7. If the ChooseProblem(top, $\Pi$, F, P, $f_{rem}$) function of Equation 7 outputs a value of true, the top-down processing may be determined to be possible (yes in operation 404). On the contrary, if the ChooseProblem(top, $\Pi$, F, P, $f_{rem}$) function outputs a value of false, the bottom-up processing may be determined to be possible (no in operation 404).

If the top-down processing on the at least one analysis equation is performed (yes in operation 404), learning on the at least one analysis equation is performed on the basis of a first learning algorithm, for example, the GEN2SPEC function (406). That is, the bottom-up processing may be performed through a first learning unit as described above. Accordingly, a first learned analysis equation may be acquired.

On the contrary, if the top-down processing is not performed (no in operation 404), the bottom-up processing may be performed in response thereto (408) and processing on the at least one analysis equation may be performed on the basis of a second learning algorithm, for example, the SPEC2GEN function. In detail, for example, in a bottom-up processing process, the analysis equation $f'_{top}$ is acquired according to the second learning algorithm and an intersection ($f_{rem} \wedge \neg f'_{top}$) between negation ($\neg f'_{top}$) of $f'_{top}$ and $f_{rem}$ is input to the variable $f_{bot}$. Processing by the second learning algorithm may be performed in the same manner as described above through a second learning unit and a second learned analysis equation may be acquired accordingly.

A process of selectively performing the bottom-up processing or the top-down processing (404 to 408) may be repeatedly performed until a selection on a processing method (i.e., top-down processing or bottom-up processing) for all or preset some of analysis equation(s) and processing according thereto (i.e., top-down processing or bottom-up processing) are terminated (412). That is, if the top-down processing or the bottom-up processing for all or preset some of analysis equation(s) is determined, the process of selecting the bottom-up or top-down processing method for the analysis equation and the bottom-up or top-down processing process according thereto may be terminated.

According to a result of repeating the process of determining the bottom-up processing or the top-down processing (404, 408) and applying the first learning algorithm according thereto (406) or applying the second learning algorithm (408), at least one learned analysis equation is determined (412, 414).

While determining the analysis equation, before determining the analysis equation, and/or after determining the analysis equation, a program to be analyzed may be input (416). The program to be analyzed may be a program to be learned. The program to be analyzed may be analyzed on the basis of the aforementioned analysis equation and an analysis depth for each function within the program to be analyzed may be determined accordingly (418). If necessary, an analysis result may be output to an outside.

The program analysis method according to the aforementioned example embodiments may be implemented in a form of a program executable by a computer device. Here, the program may include, alone or in combination with program instructions, data files, and data structures. The program may be designed and produced using a machine language code or an advanced language code. The program may be specially designed to implement the methods or may be implemented using various types of functions or definitions that are known and available to one of ordinary skill in the field of computer software. Also, here, the computer device may be implemented by including a processor or a memory capable of realizing a function of the program and may further include a communication device if necessary. Also, the program to implement the aforementioned program analysis method may be recorded in computer-readable recording media. The media may include, for example, a semiconductor storage device, such as a solid state drive (SSD), ROM, RAM, and a flash memory; magnetic disk storage media, such as a hard disk and a floppy disk; optical recording media, such as compact disk and DVD; magneto-optical recording media such as a floptical disk; and at least one type of physical device capable of storing a specific program executed according to a call of a computer such as a magnetic tape.

Although the program analysis device and method are described with reference to at least one example embodiment, the program analysis device and method are not limited to the aforementioned example embodiments. Various devices or methods that may be implemented by one of ordinary skill in the art through changes and modifications on the basis of the aforementioned example embodiments may be an example of the aforementioned program analysis device and method. For example, although the aforementioned techniques are performed in different order from the described method and/or components of the described structures, functions, circuits, and devices are coupled or combined in a different form from the aforementioned method or replaced or substituted by another component or equivalent, it may be an example embodiment of the aforementioned program analysis device and method.

**Claims**

1. A program analysis device comprising:

   a selection unit configured to select one of top-down processing and bottom-up processing for at least one analysis equation among a plurality of analysis equations;
   a first learning unit configured to, in response to the selection unit selecting the top-down processing, perform the top-down processing for the at least one analysis equation on the basis of a first learning algorithm and acquire at least one first learned analysis equation; and
   a second learning unit configured to, in response to the selection unit selecting the bottom-up processing, perform the top-down processing for the at least one analysis equation on the basis of a second learning algorithm and acquire at least one second learned analysis equation.

2. The program analysis device of claim 1, wherein the second learning unit is configured to set a target set that includes a set of at least one feature and negation thereof, to define an initial analysis equation using an initial analytic function, to select and acquire at least one clause and generalize the at least one clause, to acquire at least one generalized analysis equation using the generalized clause and the initial analysis equation, and to perform the bottom-up processing by examining a sophistication status of the acquired at least one generalized analysis equation.

3. The program analysis device of claim 2, wherein, if the at least one generalized analysis equation is not determined to be sophisticated, a more generalized analysis equation is acquired for the at least one generalized analysis equation.

4. The program analysis device of claim 1, wherein the selection unit is configured to select the top-down processing if processing of an analysis equation is capable of being completed within a given cost threshold range and to select the bottom-up processing if processing of the analysis equation is incapable of being completed within the given cost threshold range.

5. The program analysis device of claim 1, wherein the selection unit is configured to select one of the top-down processing and the bottom-up processing for the at least one analysis equation until the top-down processing or the bottom-up processing is selected for all of the plurality of analysis equations.

6. The program analysis device of claim 1, wherein the first learning unit is configured to set a target set that includes a set of at least one feature and negation thereof, to generate an initial analysis equation by including a logical sum of individual features of the target set, to acquire a refined clause by determining clauses and features and then combining the determined clauses and features, to acquire a new analysis equation on the basis of the refined clause and the initial analysis equation, and to perform the top-down processing by examining a sophistication status of the new analysis equation.

7. The program analysis device of claim 1, further comprising:
an analysis unit configured to determine an analysis depth for at least one function of a program to be analyzed using at least one of the first learned analysis equation and second learned analysis equation.

8. A program analysis method comprising:

selecting one of top-down processing and bottom-up processing for at least one analysis equation among a plurality of analysis equations; and
in response to the selection unit selecting the bottom-up processing, performing top-down processing for the at least one analysis equation on the basis of a second learning algorithm and acquiring at least one second learned analysis equation.

9. The program analysis method of claim 8, wherein the performing the top-down processing for the at least one analysis equation on the basis of the second learning algorithm and the acquiring the at least one second learned analysis equation comprises:

setting a target set that includes a set of at least one feature and negation thereof;
defining an initial analysis equation using an initial analytic function;
selecting and acquiring at least one clause and generalizing the at least one clause;
acquiring at least one generalized analysis equation using the generalized clause and the initial analysis equation; and
performing the bottom-up processing by examining a sophistication status of the acquired at least one generalized analysis equation and acquiring the second learned equation.

10. The program analysis method of claim 9, wherein the performing the top-down processing for the at least one analysis equation on the basis of the second learning algorithm and the acquiring the at least one second learned analysis equation further comprises:
if the at least one generalized analysis equation is not determined to be sophisticated, acquiring a more generalized analysis equation for the at least one generalized analysis equation.

11. The program analysis method of claim 8, wherein the selecting one of the top-down processing and the bottom-up processing for the at least one analysis equation among the plurality of analysis equations comprises:

selecting the top-down processing if processing of an analysis equation is capable of being completed within a given cost threshold range; and
selecting the bottom-up processing if processing of the analysis equation is incapable of being completed within the given cost threshold range.

12. The program analysis method of claim 8, further comprising:
when the top-down processing or the bottom-up processing is selected for all of the plurality of analysis equations, terminating a selection on one of the top-down processing and the bottom-up processing for the at least one analysis equation.

13. The program analysis method of claim 8, further comprising:
in response to the selection unit selecting the top-down processing, performing the top-down processing for the at least one analysis equation on the basis of a first learning algorithm and acquiring at least one first learned analysis equation.

**14.** The program analysis method of claim 13, wherein the performing the top-down processing for the at least one analysis equation on the basis of the first learning algorithm and the acquiring the at least one first learned analysis equation comprises:

setting a target set that includes a set of at least one feature and negation thereof;
generating an initial analysis equation by including a logical sum of individual features of the target set;
acquiring a refined clause by determining clauses and features and then combining the determined clauses and features;
acquiring a new analysis equation on the basis of the refined clause and the initial analysis equation; and
examining a sophistication status of the new analysis equation.

**15.** The program analysis method of claim 1, further comprising:
determining an analysis depth for at least one function of a program to be analyzed using the second learned analysis equation.

# FIG. 1

**Program analysis device(100)**

| | |
|---|---|
| **I/O unit** <br> **101** | **Storage(190)** |

**Processor(110)**

- Analysis equation learning unit **120**
- Analysis unit **140**

**Storage(190)**

- Program to be learned **10**
- Program to be analyzed **20**
- Learning algorithm **30**
- Learned analysis equation **80**
- Analysis result **90**
- Feature for learning a1,a2,···an

# FIG. 2

$$\langle f_0 = false, f_1 = false, f_2 = false \rangle$$

$\downarrow f_0$ learning

$$\langle f_0 = (a_1 \wedge a_2 \wedge \ldots) \vee \ldots, f_1 = false, f_2 = false \rangle$$

$\downarrow f_2$ learning

$$\langle f_0 = (a_1 \wedge a_2 \wedge \ldots) \vee \ldots, f_1 = \neg f_2 \wedge \neg f_0, f_2 = (\neg a_1 \wedge a_3 \wedge \ldots) \rangle$$

# FIG. 3

```
Program to be          ┌─ Analysis equation
learned(10)     ───→   │   learning unit(120)
                       │   ┌─────────────────────┐
                       │   │ Initial processing unit
                       │   │         121          │
                       │   └─────────────────────┘
                       │             │
                       │             ↓
                       │   ┌─────────────────────┐
                       │   │    Selection unit    │
                       │   │         122          │
                       │   └─────────────────────┘
                       │             │
                       │             ↓
                       │   ┌─────────────────────┐        ┌─ Learning algorithm(30)
                       │   │  First learning unit │        │  ┌──────────────────┐
                       │   │        124-1         │ ←───── │  │  First learning  │
                       │   └─────────────────────┘        │  │    algorithm     │
                       │             │                     │  │       30-1        │
                       │             ↓                     │  └──────────────────┘
                       │   ┌─────────────────────┐        │  ┌──────────────────┐
                       │   │ Second learning unit │ ←───── │  │ Second learning  │
                       │   │        124-2         │        │  │    algorithm     │
                       │   └─────────────────────┘        │  │       30-2        │
                       └─                                  └─ └──────────────────┘
```

# FIG. 4

```
1: procedure Learn( F, P,k,𝔸 )
2:     ⟨f₀,f₁,⋯,fₖ⟩ ← ⟨false,false,…,false⟩
3:     bot ← 0
4:     top ← k
5:     while top ≠ bot do
6:         f_rem ← ¬(⋁ₙ₌₀ᵏ fₙ)
7:         b ← ChooseProblem(top,⟨ f₀,f₁,…,fₖ⟩,F,P,f_rem
8:         if( b=true ) then
9:             f_top ← Gen2Spec (top-1, top,⟨f₀,f₁,…fₖ⟩,F,P,𝔸,f_rem)
10:            top ← top-1,
11:        else
12:            f′_top ← Spec2Gen (bot,top,⟨f₀,f₁,…fₖ⟩,F,P,𝔸,f_rem)
13:            f_bot ← f_rem ∧ ¬f′_top
14:            bot ← bot + 1
15:        end if
16:     end while
17:     f_top ← ¬(⋁ₙ₌₀ᵏ fₙ)
18:     return⟨f₀,f₁,…fₖ⟩
19: end procedure
```

# FIG. 5

```
procedure  G EN 2S PEC (bot, top, ⟨f₀, f₁, ... fₖ⟩, F, P, 𝔸, f_rem)
    𝔸 ← 𝔸 ∪ { ¬ aⱼ | aⱼ ∈ 𝔸}
    f ← {{ aᵢ } | aᵢ ∈ 𝔸}
    W ← f
    while W ≠ ∅ do
        c ← MostExpensiveClause (W, F, P, )
        W ← W \ {c}
        a ← ChooseAtom (𝔸, c)
        c' ← c ∪ { a }
        f_top ← (f \ {c}) ∪ {c'}
        Π ← MakeDisjoint( bot, top, f_rem, ⟨f₀, f₁, ... fₖ⟩)
        if Precise( Π, F, P ) then
            f ← f_top
            W ← W ∪ {c' }
        end if
    end while
    return f ∧ f_rem
end procedure
```

# FIG. 6

```
procedure SPEC 2GEN (bot, top, ⟨f_0, f_1, ... f_k⟩, F, P, 𝔸, f_rem)
    𝔸 ← 𝔸 ∪ {¬ a_j | a_j ∈ 𝔸}
    f ← InitialFormula(𝔸, P)
    W ← f
    while W ≠ ∅ do
        c ← ChooseClause(W)
        W ← W \ {c}
        while true do
            a ← ChooseAtom(c)
            if a = false then
                break
            end if
            f_top ← (f \ {c}) ∪ {c \ {a}}
            Π ← MakeDisjoint(bot, top, ⟨f_0, f_1, ... f_k⟩)
            if Precise(Π, F, P) then
                return f_top
            else
                f ← f_top
            end if
        end while
    end while
    return true
end procedure
```

# FIG. 7

Method1:$\{\alpha_1, \alpha_2\}$

Method2:$\{\alpha_1\}$

Method3:$\{\alpha_2\}$

Method4:$\{\}$

20: 20-1 ~ 20-4

Analysis
unit
140

$f_2$: $(\alpha_1 \wedge \alpha_2) \vee (\neg \alpha_1 \wedge \neg \alpha_2)$

$f_1$: $(\alpha_1 \wedge \neg \alpha_2)$

$f_0$: $(\neg \alpha_1 \wedge \alpha_2)$

80

| | |
|---|---|
| Very accurately analyze | Method 1 Method 4 |
| Accurately analyze | Method 2 |
| Approximately analyze | Method 3 |

90

# FIG. 8

```
           ( Start )
               │
               ▼
      ┌─────────────────┐
      │ Initialization  │───400
      └─────────────────┘
               │
               ▼
      ┌─────────────────┐
      │Select learning target│───402
      └─────────────────┘
               │
        ┌──────┤
        │      ▼           404
        │    ◇─────────◇        No
        │   ◇  top-down? ◇───────────────┐
        │    ◇─────────◇                 │          408
        │      │ Yes        406           ▼
        │      ▼                 ┌──────────────────────┐
        │ ┌──────────────┐       │ Bottom-up processing on│
        │ │First learning│       │      basis of second   │
        │ │  algorithm   │       │   learning algorithm   │
        │ └──────────────┘       └──────────────────────┘
        │      │                          │
        │      ▼◄─────────────────────────┘
        │      │           412
        │    ◇─────────◇
    Yes │   ◇  Repeat?  ◇
        └──◇─────────◇
               │ No
               ▼
      ┌─────────────────┐
      │Determine analysis│───414
      │    equation     │
      └─────────────────┘
               │
               ▼
      ┌─────────────────┐
      │ Input program to be│───416
      │     analyzed    │
      └─────────────────┘
               │
               ▼
      ┌─────────────────┐
      │Acquire analysis result│───418
      └─────────────────┘
               │
               ▼
           (  End  )
```

<div align="center">

**INTERNATIONAL SEARCH REPORT**

</div>

| | International application No. |
|---|---|
| | **PCT/KR2022/002759** |

**A.    CLASSIFICATION OF SUBJECT MATTER**

**G06F 11/36**(2006.01)i; **G06N 20/20**(2019.01)i

According to International Patent Classification (IPC) or to both national classification and IPC

**B.    FIELDS SEARCHED**

Minimum documentation searched (classification system followed by classification symbols)

G06F 11/36(2006.01); G06F 1/00(2006.01); G06F 11/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프로그램 테스트(program test), 상향식(bottom-up), 하향식(top-down), 선택 (select), 함수(function)

**C.    DOCUMENTS CONSIDERED TO BE RELEVANT**

| Category* | Citation of document, with indication, where appropriate, of the relevant passages | Relevant to claim No. |
|---|---|---|
| A | JP 2015-001825 A (FUJI ELECTRIC CO., LTD.) 05 January 2015 (2015-01-05)<br>    See claims 1-10. | 1-15 |
| A | KR 10-2114547 B1 (KOREA ADVANCED INSTITUTE OF SCIENCE AND TECHNOLOGY) 25 May 2020 (2020-05-25)<br>    See paragraphs [0042]-[0052]; and figure 1. | 1-15 |
| A | KR 10-2018-0119260 A (CODEMIND CORPORATION et al.) 02 November 2018 (2018-11-02)<br>    See paragraphs [0054]-[0063]; and figure 3. | 1-15 |
| A | WO 98-06019 A2 (INTRINSA CORPORATION) 12 February 1998 (1998-02-12)<br>    See claims 1-22. | 1-15 |
| A | US 2020-0285563 A1 (FUJITUS LIMITED) 10 September 2020 (2020-09-10)<br>    See paragraphs [0065]-[0081]; and figures 3A-3B. | 1-15 |

☑ Further documents are listed in the continuation of Box C.          ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **30 May 2022** | **30 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/002759** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 1605968 A (NANJING UNIVERSITY) 13 April 2005 (2005-04-13)<br>See claims 1-4. | 1-15 |

Form PCT/ISA/210 (second sheet) (July 2019)

**INTERNATIONAL SEARCH REPORT**
Information on patent family members

| International application No. |
| --- |
| **PCT/KR2022/002759** |

| Patent document cited in search report | | | Publication date (day/month/year) | Patent family member(s) | | | Publication date (day/month/year) |
| --- | --- | --- | --- | --- | --- | --- | --- |
| JP | 2015-001825 | A | 05 January 2015 | JP | 6107455 | B2 | 05 April 2017 |
| KR | 10-2114547 | B1 | 25 May 2020 | KR | 10-2019-0128457 | A | 18 November 2019 |
| KR | 10-2018-0119260 | A | 02 November 2018 | None | | | |
| WO | 98-06019 | A2 | 12 February 1998 | JP | 2002-515996 | A | 28 May 2002 |
| | | | | JP | 4633203 | B2 | 16 February 2011 |
| | | | | WO | 98-06019 | A3 | 26 March 1998 |
| US | 2020-0285563 | A1 | 10 September 2020 | JP | 2020-144842 | A | 10 September 2020 |
| | | | | US | 11237943 | B2 | 01 February 2022 |
| CN | 1605968 | A | 13 April 2005 | CN | 100465853 | C | 04 March 2009 |

Form PCT/ISA/210 (patent family annex) (July 2019)